# EUROPEAN PATENT SPECIFICATION

(11) **EP 0 599 335 B1**
(45) Date of publication and mention of the grant of the patent: **02.05.1997**
(21) Application number: 93119064.9
(22) Date of filing: 25.11.1993
(51) Int. Cl.: G01N 21/88

(54) **Cylindrical container inner surface tester**
Vorrichtung zur Kontrolle der Innenfläche eines zylindrischen Behälters
Dispositif de contrôle de la surface interne d'un récipient cylindrique

(30) Priority: 25.11.1992 JP 313827/92
(43) Date of publication of application: 01.06.1994
(73) Proprietor: FUJI ELECTRIC CO., LTD., Kawasaki-shi Kanagawa 210 (JP)
(72) Inventor: Toyama, Kouichi, c/o Fuji Electric Co., Ltd., Kawasaki-shi, Kanagawa, 210 (JP)
(74) Representative: DIEHL GLAESER HILTL & PARTNER

(56) References cited:
- EP-A- 0 362 679
- EP-A- 0 491 663
- US-A- 4 513 316
- PATENT ABSTRACTS OF JAPAN vol. 14, no. 434 (P-1107) 18 September 1990 & JP-A-02 171 640 (FUJI ELECTRIC) 3 July 1990

## Description

### Background of the Invention

### Field of the Invention

The present invention relates to a cylindrical container inner surface tester for checking through an image processing operation the inner surface of a cylindrical container having a joint in the side of a paper cup, etc. to be carried on a conveyor, and for detecting foreign substances, dust, scratches, etc. on the surface.

### Description of the Prior Art

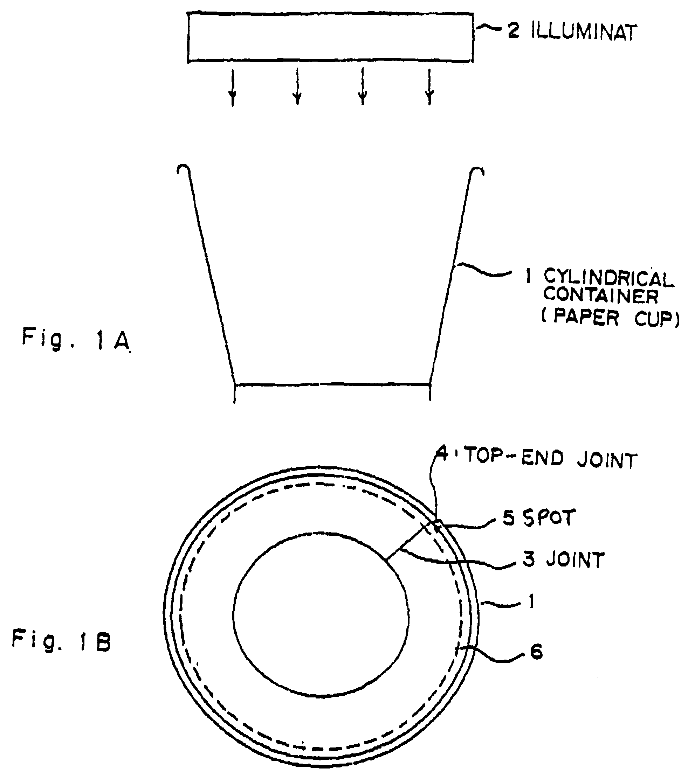

Figure 1A shows a cylindrical container and a method of illuminating the inner surface of the container with a conventional cylindrical container inner surface tester (hereinafter referred to simply as a tester). Figure 1A shows a paper cup 1, that is, a typical cylindrical container, and the sectional view of a ring-shaped illuminator 2 provided above the paper cup 1. Figure 1B shows an example of an image (image data stored in a frame memory of the tester) obtained by capturing the inner surface of the paper cup 1 from above the paper cup 1 by a wide-angle-lens camera not shown in Figure 1. As shown in Figure 1B, a joint 3 is detected in the side of the cup in the image. The joint 3 can be considered to be a generally straight line. However, since the opening of the paper cup 1 is formed as a curled rim for reinforcement, a top-end joint 4 is not in the line of the joint 3, indicating irregularity. The irregularity arises partly because the center of a camera lens through which the paper cup 1 is captured does not always match the central axis of the paper cup 1, and partly because the paper cup 1 is not necessarily curled correctly. Furthermore, since a normal cylindrical container can rotate at any angle while it is carried on a conveyor, the position of the joint 3 in the side of the container cannot be specified in a test image.

Assume that a spot 5 exists around the top-end joint 4 indicating the irregularity at the end of the straight line. Conventionally, the joint 3 is considered to be a straight line, and a multi-value continuous tone image signal (image data) read from a frame memory is converted to a binary value according to a predetermined threshold to generate a binary image signal. Then, the coordinate of each point of picture elements forming the joint can be determined by scanning the binary image signal and storing the coordinate indicating a change in binary image signals. Next, it is determined whether or not each point is in the joint. If a coordinate is obtained as being in the straight line, then it indicates that the point is in the joint. Then, an image indicating a spot is detected around the joint. For example, a regression line is obtained from the coordinate of each change point; the distance from the regression line to each of the above described coordinates is obtained; and all distance values are added up. An image indicating a spot around the joint 3 can be determined by checking the sum whether or not it is equal to or smaller than a predetermined threshold.

However, as described above, the top-end joint 4 detected at the curled rim indicates irregular data compared with the joint 3, and is not in the joint 3 according to the above described conventional method of detecting a picture element indicating a spot. Therefore, if the top-end joint 4 is included in the determination, the difference between the top-end joint 4 and an approximated line of the joint 3 is accumulated as an error when the above described sum is obtained, thereby lowering the precision of a test around the joint 3. Accordingly, the deterioration in precision cannot be prevented if the joint 3 and the top-end joint 4 are tested as being processed in the same test area. Thus, it is necessary to process each of the joint 3 and the top-end joint 4 in a separate test area. Since the cylindrical container (paper cup 1) freely rotates as described above, the position of the joint 3 is calculated according to a binary image signal generated for each test image. According to the result, the position of the top-end joint 4 can be determined.

A method of processing the top-end joint 4 in a separate area can be to detect a picture element indicating a spot by segmenting the area between a broken line 6 and the circumference of the container as an independent test area segmented in the form of a ring-shaped area and by performing a binary conversion using an appropriate threshold. However, according to this method, a test area specified as the area around the top-end joint 4 is exceedingly large, thereby taking a long time in performing an arithmetic operation to test a single paper cup 1. As a result, the test cannot be practically carried out at a container production speed.

US 4 513 316 discloses apparatus for detecting an inclined seam in the optical image of a cup from stored digital data and subsequently performing a masking treatment to the image information corresponding to this inclined seam.

### Summary of the Invention

As described above, an efficient method of testing the area around the top-end joint 4 by limiting it to a small area has been required, but has not been developed yet. The present invention has been developed based on the above described background, and provides a cylindrical container inner surface tester for practically testing a picture element indicating a spot around the top-end joint 4 at a high speed enough to perform a test at a production speed and with high precision.

The present invention relates to a cylindrical container inner surface tester for determining a spot on the inner surface of the side of an axis-symmetrical cylindrical container of a predetermined form having a linear joint in its side surface, by illuminating the inside of the cylindrical container from above, capturing through a TV camera the illuminated surface of the cylindrical container from above in the axis direction of the cylindrical container, and analyzing the captured image. The configuration of the present invention is described as follows. The tester according to the present invention comprises a frame memory for storing a multi-value continuous tone image signal obtained by A/D-converting a continuous tone image signal obtained by scanning the captured image; an area specifying circuit for generating a ring-shaped window pattern such that the image of the joint in the side of the container is included in the pattern; a change point storage circuit for converting to a binary value according to a predetermined threshold a multi-value continuous tone image signal read by a horizontal or vertical scanning operation from an area specified by a ring-shaped window pattern generated by the area specifying circuit, and for storing for each scanning operation the coordinate of a signal change point of a binary image signal generated by the converting process; a position determining circuit for determining the position of a line similar to the joint in the side surface of the container according to the coordinates of signal change points stored in the change point storing circuit; an intersection calculating circuit for calculating the coordinate of an intersection between a line determined by the position determining circuit and the ring-shaped window pattern; a reference coordinate determining circuit for determining a generation reference coordinate of a subwindow by adding a predetermined offset value to the intersection coordinate obtained by the intersection calculating circuit; and a target area extracting circuit for generating a subwindow of a predetermined form according to the generation reference coordinate of a subwindow determined by the reference coordinate determining circuit, and for determining as a test target area to be searched for a spot an image area, in the frame memory, corresponding to the area of the subwindow.

The cylindrical container inner surface tester according to the present invention can also be designed as further comprising a binary image signal generating circuit for generating a binary image signal by converting to a binary value a multi-value continuous tone image signal in the sub-window according to a predetermined threshold for use in detecting the background of the cylindrical container, wherein the target area extracting circuit determines as a test target area to be searched for a spot an image area, in the frame memory, corresponding to the area obtained by excluding the background of the cylindrical container from the subwindow area.

The present invention can be applicable as a cylindrical container inner surface tester for determining a spot on the inner surface of the side of a cylindrical container of a predetermined form having a linear joint in its side surface, by capturing through a TV camera the illuminated surface of the cylindrical container obliquely from above in the axis direction of the cylindrical container, and by analyzing the captured image.

### Brief Description of the Drawings

One skilled in the art can easily understand the additional features and objects of this invention from the description of the preferred embodiments and some of the attached drawings. In the drawings:
Figures 1A to 1B show examples of an image obtained by capturing a cylindrical container using an illuminator in a conventional method;
Figure 2 indicates a ring-shaped window provided to detect the position of the joint in a cylindrical container according to the present invention;
Figure 3 indicates the intersection of the ring-shaped window and the joint line of the cylindrical container;
Figures 4A to 4C indicate a method of setting a subwindow containing the joint of the cylindrical container and a target area;
Figure 5 shows another example of the capture direction a cylindrical container;
Figure 6 indicates a fixed window provided to detect the position of a joint for an image captured in the direction described above;
Figure 7 indicates an intersection of the joint line of the above described image and the ring-shaped window;
Figures 8A to 8C indicate a method of setting a subwindow in the above described fixed window and a target area;
Figure 9 is a block diagram of the hardware configuration of the cylindrical container inner surface tester according to an embodiment of the present invention; and
Figure 10 is a block diagram of the hardware configuration of the cylindrical container inner surface tester according to another embodiment of the present invention.

### Description of the Preferred Embodiments

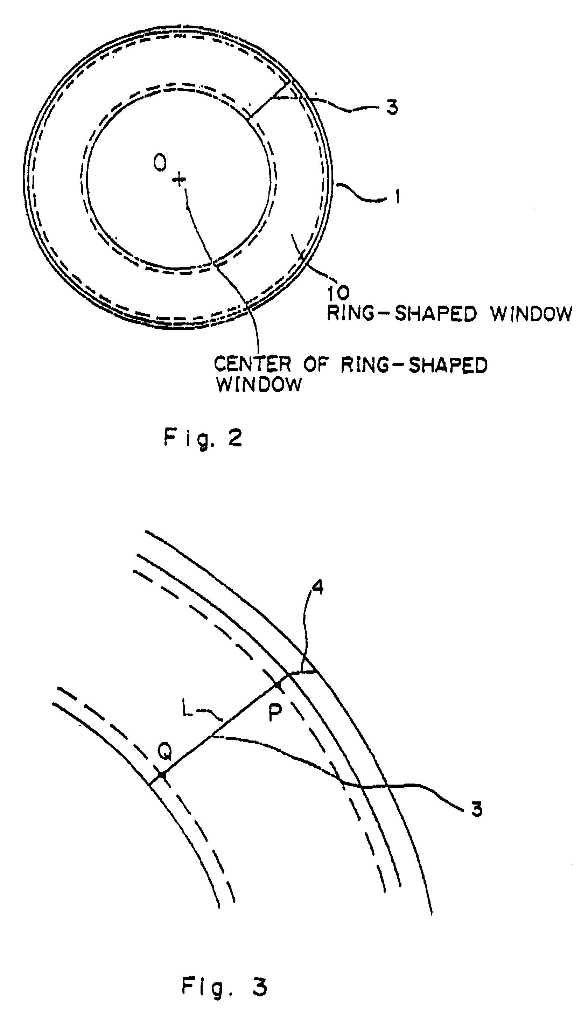

Figure 2 shows the image of the paper cup 1, that is, a cylindrical container, captured from above to be tested. According to the present invention, a ring-shaped window 10 is specified in a container side shown in the image. The ring-shaped window comprises two concentric circles, that is, an inner circumference shown in broken line and an outer circumference. The ring-shaped window 10 has a center O and contains the joint 3 inside. Thus, after setting the ring-shaped window 10, the area of the ring-shaped window 10 in a frame memory is specified as an area to be tested, and a multi-value continuous tone image signal in the test area is converted to a binary image signal according to a predetermined threshold. Then, the coordinate of the binary image of only the joint 3 can be obtained by scanning the binary image signal and storing the coordinate of a signal change point for each scanning line.

Figure 3 is an enlarged drawing of the joint 3. As described above, the joint 3 is approximated as a straight line L. The straight line L can be obtained by, for example, obtaining a regression line from the coordinate of each picture element forming the joint 3, and by obtaining a line KE as an approximation by calculating the distance between each picture element forming the joint 3 and the center O of the ring-shaped window 10, and determining the point K nearest to the point O and the point E farthest from the point O. After obtaining the equation of the line L as described above, an intersection P of the line L and the ring-shaped window 10 is obtained. Figure 3 also shows an intersection Q of the line L and the inner circumference of the ring-shaped window 10.

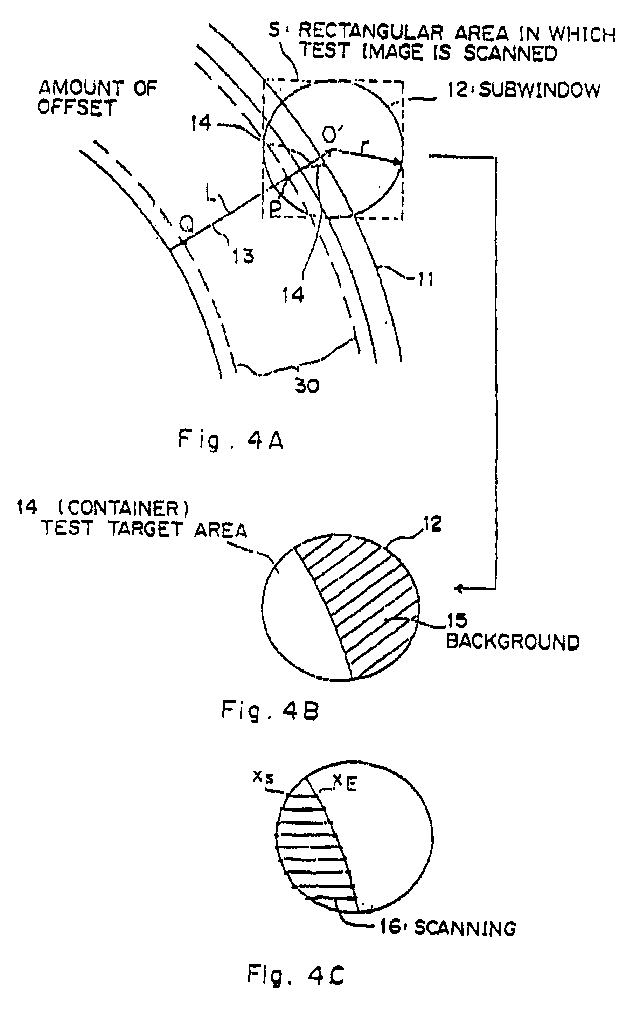

Figure 4 shows the method of generating an area to be tested around the top-end joint 4. That is, after the above described process, a point O' is obtained by adding an offset value 11 to the coordinate of the intersection P in the direction extended from the intersection P toward the circumference as shown in Figure 4. Then, a subwindow 12 having the central point O' and a radius r is generated. Although the form of the subwindow is not limited to a circle, a circle is preferable because the container 1 (paper cup 1) is actually a cylindrical container, the container 1 easily rotates, and the position of the joint 3 is not fixed in the test image. Thus, the subwindow 12 is generated around the top-end joint 4 as a test area.

Next, Figure 4B shows an enlarged image of the subwindow 12. First, a test target area 14 is a part of the image of the container in the subwindow 12. The position of the subwindow 12 in the image depends on the position of the joint 3 movable according to the rotation of each container. Accordingly, the form of the target area 14 in the subwindow 12 is not fixed, but varies with the rotation of each container. A background 15 is distinguished from the target area 14 by showing it in black without luster so that it cannot be taken for a picture element indicating a black spot. This can be easily realized because the image of the inner surface of the container 1 can be illuminated brightly compared with the image indicating the area outside the container 1, that is, the background 15. Then, the subwindow 12 is scanned and the test target area 14 is segmented according to an appropriate threshold TH1, thereby setting a scanning line 16 associated with only the inside of the test target area 14.

When a picture element indicating a black spot is to be detected, a binary signal start point XS and a binary signal end point XE are obtained for each scanning line 16. Then, the area between the start point XS and the end point XE is specified as a test target area for each scanning line. Thus, the test target area in the subwindow 12 can be limited to the area 14 as shown in Figures 4B and 4C.

Furthermore, as another method of determining the test target area 14 in the subwindow 12, a background-excluded binary image is stored in a memory for storing data of a test target area. In this case, the frame memory is scanned again and an AND operation is performed for each picture element corresponding to a binary image in the memory for storing data of a target area in the subwindow 12 when a picture element indicating a black spot is to be detected.

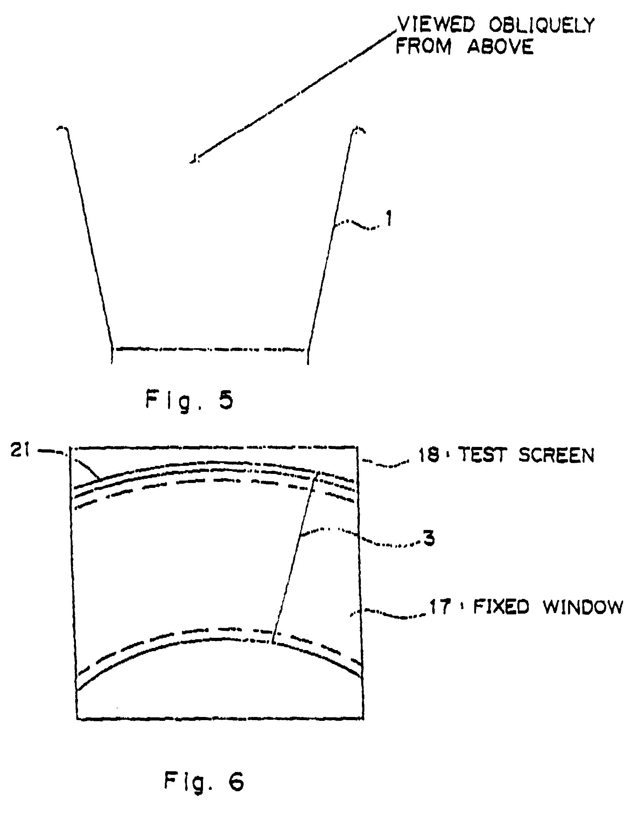

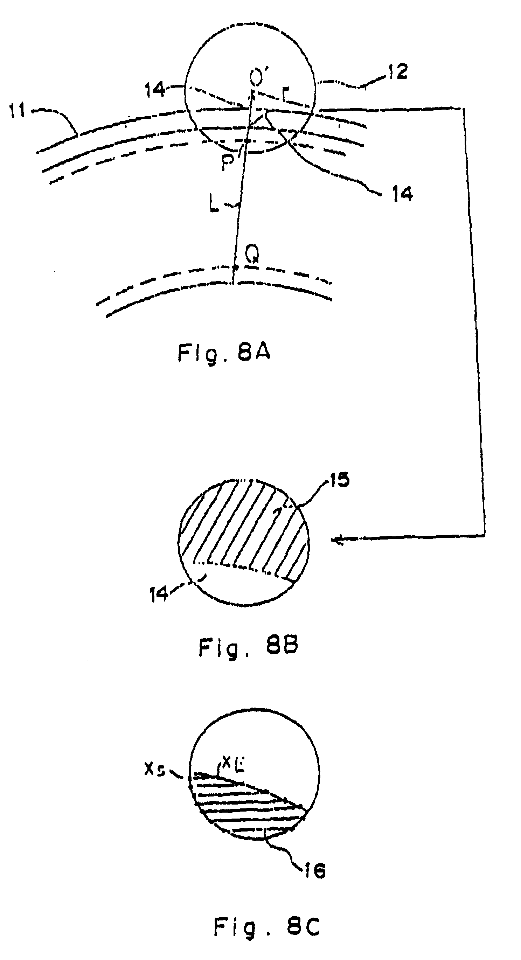

Figure 5 shows the case where the inner side of the container 1 is captured obliquely from above. If the inner side is captured obliquely, more screens are required to test over the inner side completely, but with higher resolvability than in the case where it is captured right from above. Figures 6, 7, 8A, 8B, and 8C showing the image obtained when the container is captured obliquely from above correspond to Figures 2, 3, 4A, 4B, and 4C respectively.

In Figure 6, a fixed window 17 is provided in a test screen 18 (a screen of a display unit such as a CRT, etc.). The test method is almost the same as the case where the container 1 is captured right from above except the capture direction and the window form.

Thus, according to the present invention, a black spot is detected around the top-end joint 4 in the container 1 by specifying the subwindow 12 of a predetermined form having a predetermined center point O' in the extension of the joint line L after the position of the linear joint 3 in a cylindrical container has been detected. As a result, a spot can be efficiently detected around the joint with high precision at a high speed.

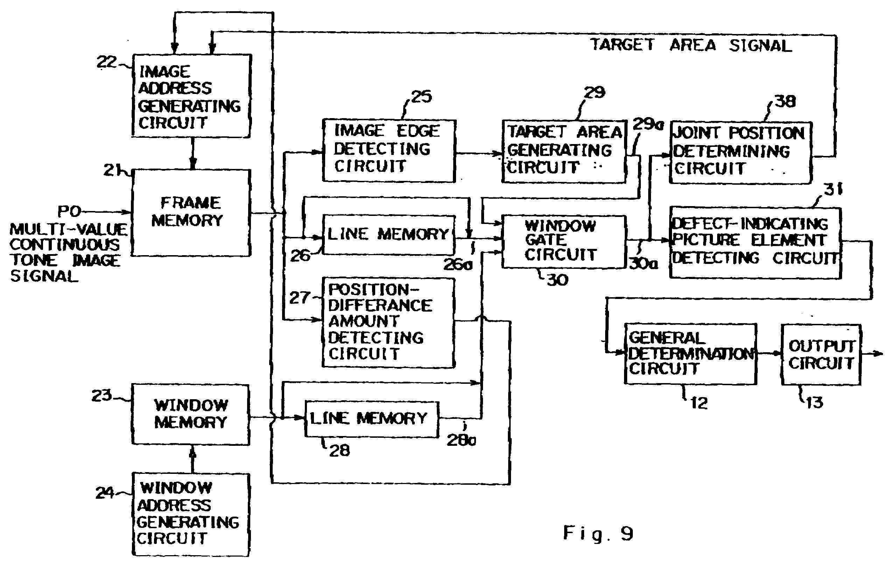

Figure 9 is the block diagram of the hardware of the cylindrical container inner surface tester according to the first embodiment of the present invention. According to the explanation below, Figures 1 and 4 are also referred to.

In Figure 9, a frame memory 21 stores a multi-value continuous tone image PO obtained by capturing the cylindrical container 1 (a paper cup 1 shown in Figure 1) to be tested from above. An image address generating circuit 22 provides for the above described frame memory 21 an address at which a multi-value continuous tone image PO is stored. A window memory 23 stores as a graphic pattern the ring-shaped window 10 and the subwindow 12 where the position of the joint 3 of the cylindrical container 1 is detected. A window address generating circuit 24 generates an address at which the above described graphic pattern is generated for the window memory 23.

An image edge detecting circuit 25 detects a circuit for detecting a test target area 14 in the subwindow 12, and the image edge detecting circuit 25 is provided with a binary conversion circuit for segmenting the background 15 and the container (test target area) 14 in the subwindow 12, and stores the coordinate of a change point of a binary signal. A line memory 26 delays a multi-value continuous tone image signal inputted from the frame memory 21 by one horizontal scanning process. A position difference amount detecting circuit 27 detects the difference of the capture position of the cylindrical container 1 in the frame memory 21. Another line memory 28 delays an image mask signal inputted from the window memory 23 by one horizontal scanning process.

Each of output signals 26a and 28a from the line memory 26 and 28 are outputted to a window gate circuit 30, and a multi-value continuous tone image signal is ANDed with an image mask signal and selected for each picture element.

A target area generating circuit 29 generates coordinate data from a binary conversion start point XS to a binary conversion end point XE of an image edge detected by the image edge detecting circuit 25. A target area signal 29a is outputted to the window gate circuit 30.

An output 30a of the window gate circuit 30 is provided for a joint position determining circuit 38 or a defect-indicating picture element detecting circuit 31. The defect-indicating picture element detecting circuit 31 detects a picture element indicating a black spot (refer to the joint 4 and the spot 5 shown in Figure 1B) by a method of detecting, for example, the valley of a signal change as a defective portion converted to a binary representation (for example, U.S. Patent 5,233,199). A general determination circuit 32 obtains the number of picture elements indicating a black spot and obtains the area of a black spot. If the area is larger than a predetermined area threshold, the circuit determines that the tested container 2 is defective. A signal indicating whether or not a container finally determined by the general determination circuit 32 is acceptable is outputted externally through the output circuit 13.

Next, an operation of the above described embodiment is explained in order.

First, a multi-value continuous tone image signal PO, that is, the capture data of the container 1, is stored in the frame memory 21 as a test image. The first scanning operation is performed for the frame memory 21 so as to detect the position difference of the container 1.

Namely, the image address generating circuit 22 generates an address of all or a part of a rectangular area for a multi-value continuous tone image signal PO stored in the frame memory 21. At this time, the multi-value continuous tone image signal outputted from the frame memory 21 is applied to the position difference amount detecting circuit 27, and the position difference of the container 1 is detected in the test image. The position of a cylindrical container can be detected using a middle point between the first rise point where the outline of the outer circle of a cylindrical container appears and the last fall point in a scanning line of a binary image (for example, U.S. Patent 5,233,199).

Next, in detecting the position of the above described joint 3, the amount of a position difference of the container 1 outputted by the position difference amount detecting circuit 27 is applied to the image address generating circuit 22. Then, the second scanning operation is performed for the frame memory 21. During the second scan over a test image, the position of the container 1 is corrected according to the amount of a position difference. After the correction, a multi-value continuous tone image signal skips the line memory 26 and is directly applied to the window gate circuit 30. Simultaneously, the pattern data of the ring-shaped window 10 stored in the window memory 23 are sequentially read synchronously with the scanning operation over a test image in picture element units, and the read pattern data are applied to the window gate circuit 30 with another line memory 28 bypassed. The window gate circuit 30 ANDs the above described two input signals, generates a multi-value continuous tone image signal in the ring-shaped window 10 shown in Figure 2 and containing only the joint 3, and outputs the result to the joint position determining circuit 38.

The joint position determining circuit 38 converts to a binary an inputted multi-value continuous tone image signal, detects the coordinate of each picture element in the binary representation, determines the regression line L of each picture element, and calculates the coordinate of the intersection P of the line L and the outer circumference of the ring-shaped window. Then, it calculates the generation reference coordinate of the subwindow 12 (the coordinate of the center O' of the subwindow 12 in the present example) by adding a predetermined offset value to the coordinate of the intersection P, and determines the rectangular area S circumscribing the subwindow 12 (Figure 4) for use in a test image scanning for the subwindow 12 generated according to the reference coordinate. Then, it outputs the area data indicating the rectangular area S to the image address generating circuit 22.

Next, the third scanning operation is performed for the frame memory 21. During the scanning operation, the area around the top-end joint 4 is scanned by scanning the frame memory 21 in the above described rectangular area S, and the resultant multi-value continuous tone image signal is applied to the image edge detecting circuit 25 and the line memory 26. Synchronously, the pattern data of the subwindow 12 are read from the window memory 23, and the read pattern data are applied to the line memory 28. The line memories 26 and 28 delay an inputted signal by one horizontal scanning line according to an FIFO method, and an arithmetic operation is performed by the image edge detecting circuit 25 and the target area generating circuit 29 during the delay period to determine the test image area in the subwindow 12. That is, the image edge detecting circuit 25 converts an inputted multi-value continuous tone image signal to a binary value, and detects a signal start point coordinate XS and a signal end point coordinate XE in one scanning line in the binary signal. During the detecting process, a test image and a signal from the subwindow 12 are temporarily stored in the line memories 26 and 28 respectively. Then, at the scanning operation after detecting the coordinate points XS and XE by the image edge detecting circuit 25, the target area generating circuit 29 generates an image gate signal between the coordinate points of the binary signal start point XS and the binary signal end point XE, and applies it to the window gate circuit 30. Simultaneously, the outputs from the line memories 26 and 28 are applied to the window gate circuit 30. The window gate circuit 30 outputs to the defect-indicating picture element detecting circuit 31 a multi-value continuous tone image signal, obtained by ANDing these three signals, in the subwindow 12 containing only the top-end joint 24. According to the signal, the defect-indicating picture element detecting circuit 31 then detects a picture element indicating a defect in the subwindow 12 area.

Thus, in the above described embodiment, a target area is detected (between the coordinate points XS and XE) in each scanning operation by the target area generating circuit 29 in a series of 3 scanning operations performed for the frame memory 21; a multi-value continuous tone image signal in the area is sequentially outputted in each scanning process; and only a multi-value continuous tone image signal in the test target area 14 except the background 15 in the subwindow 12 is outputted to the defect-indicating picture element detecting circuit 31.

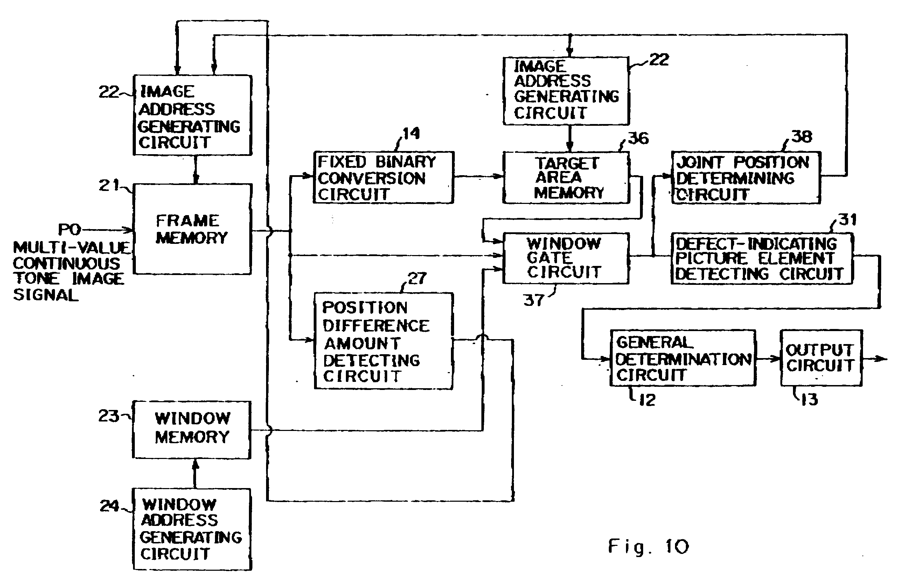

Figure 10 is the block diagram showing the configuration of the hardware of the cylindrical container inner surface tester according to the second embodiment of the present invention. A binary conversion circuit 34 converts to a binary value a multi-value continuous tone image signal read from the area corresponding to the rectangular area S of the frame memory 21. A target area memory 36 stores a binary image of the container 1 except the background 15. An image address generating circuit 35 provides an address of a binary image to be stored in the target area memory 36. A window gate circuit 37 has a similar function as the window gate circuit 30 shown in Figure 9. Other portions assigned the same number in the configuration as that shown in Figure 9 has also the same function.

According to the second embodiment, the pattern data in the target area 14 of the container 1 with the area corresponding to the background 15 excluded from the rectangular area S are temporarily stored in the target area memory 36 in the third scanning operation performed for the frame memory 21. Then, in the fourth scanning operation, an area corresponding to the rectangular area S in the frame memory 21 is scanned again. At this time, a multi-value continuous tone image signal, an area signal of pattern data read from the target area memory 36, and an area signal of the subwindow 12 read from the window memory 23 are applied to the window gate circuit 37. The window gate circuit 37 ANDs these three signals, and outputs only the multi-value continuous tone image signal of the target area 14 in the subwindow 12 to the defect-indicating picture element detecting circuit 31.

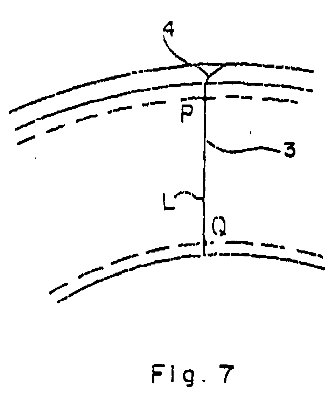

Next, the third embodiment is explained below. In this embodiment, the upper part of the inner surface of the container 1 is captured obliquely from a predetermined point above as shown in Figure 7. In this case, the container is captured in a plurality of directions (three directions, for example) making an equal angle to each other round the center of the container. As a result, the joint 3 is necessarily included in the test screen 18. The test screen shown in Figure 6 is one of the screens captured by a plurality of capturing devices.

In this case, an image of the container 1 is captured as a part of an oval image. Therefore, an oval-shaped window (fixed window) 17 is required in place of the ring-shaped window 10 shown in Figure 2. Since the form of the container 1 and the capture directions are fixed, the fixed window 17 can be easily generated. Furthermore, the difference of the position of the container 1 is detected to generate the fixed window 17 such that a middle point between the first rise point where the outer circumference of the container 1 appears and the last fall point in a horizontal scanning line of a binary image as in the previous embodiment is obtained. The processes after the position of the joint 3 has been detected are the same as those in the previous embodiments.

Therefore, in the present embodiment, since only the ring-shaped window 10 has to be replaced with the fixed window 17 in the window memory 23, the hardware configuration shown in Figures 9 and 10 can be used as is.

Thus, according to the present invention, since a test area is segmented into a small area by a subwindow, a ratio of a normal black spot area (the area of the joint 4 shown in Figure 1B) to an actual black spot area (the area of the spot 5 shown in Figure 1B) is large. Therefore, a highly precise test result can be obtained.

## Claims

1. A cylindrical container inner surface tester for determining a spot (5) on the inner surface of the side of an axis-symmetrical cylindrical container (1) of a predetermined form having a linear joint (3, 4) in its side surface, by illuminating (2) the inside of said cylindrical container from above, capturing through a TV camera the illuminated surface of said cylindrical container from above in the axis direction of said cylindrical container, and analyzing the captured image, said tester comprising:
a frame memory (21) for storing a multi-value continuous tone image signal obtained by A/D-converting a continuous tone image signal obtained by scanning said captured image;
area specifying means (30, 37) for generating a ring-shaped window pattern such that the image of said joint in the side of said container is included in said pattern;
change point storage means (25, 38) for converting to a binary value according to a predetermined threshold a multi-value continuous tone image signal read by a horizontal or vertical scanning operation from an area specified by a ring-shaped window pattern generated by said area specifying means, and for storing for each scanning operation the coordinate of a signal change point of a binary image signal generated by said converting process;
position determining means (25, 38) for determining the position of a line similar to said joint in the side surface of said container according to the coordinates of signal change points stored in said change point storing means;
intersection calculating means (23, 30, 37, 38) for calculating the coordinate of an intersection between a line determined by said position determining means and said ring-shaped window pattern;
reference coordinate determining means (22, 30, 37, 38) for determining a generation reference coordinate of a subwindow by adding a predetermined offset value to said intersection coordinate obtained by said intersection calculating means; and
target area extracting means (22, 30, 37, 38) for generating a subwindow of a predetermined form according to the generation reference coordinate of a subwindow determined by said reference coordinate determining means, and for determining as a test target area to be searched for a spot an image area, in said frame memory, corresponding to the area of said subwindow.

2. The cylindrical container inner surface tester according to Claim 1, further comprising:
binary image signal generating means (25, 14) for generating a binary image signal by converting to a binary value a multi-value continuous tone image signal in said sub-window according to a predetermined threshold for use in detecting the background of said cylindrical container, wherein
said target area extracting means determines as a test target area to be searched for a spot an image area, in said frame memory, corresponding to the area obtained by excluding the background of said cylindrical container from said subwindow area.

3. A cylindrical container inner surface tester for determining a spot (5) on the inner surface of the side of an axis-symmetrical cylindrical container (1) of a predetermined form having a linear joint (3, 4) in its side surface, by illuminating (2) the inside of said cylindrical container from above, capturing through a TV camera the illuminated surface of said cylindrical container obliquely from above in the axis direction of said cylindrical container, and analyzing the captured image, said tester comprising:
a frame memory (21) for storing a multi-value continuous tone image signal obtained by A/D-converting a continuous tone image signal obtained by scanning said captured image;
area specifying means (30, 37) for generating a fixed window pattern such that the image of said joint in the side of said container is included in said pattern;
change point storage means (25, 38) for converting to a binary value according to a predetermined threshold a multi-value continuous tone image signal read by a horizontal or vertical scanning operation from an area specified by a fixed window pattern generated by said area specifying means, and for storing for each scanning operation the coordinate of a signal change point of a binary image signal generated by said converting process;
position determining means (25, 38) for determining the position of a line similar to said joint in the side surface of said container according to the coordinates of signal change points stored in said change point storing means;
intersection calculating means (23, 30, 37, 38) for calculating the coordinate of an intersection between a line determined by said position determining means and said fixed window pattern;
reference coordinate determining means (22, 30, 37, 38) for determining a generation reference coordinate of a subwindow by adding a predetermined offset value to said intersection coordinate obtained by said intersection calculating means; and
target area extracting means (22, 30, 37, 38) for generating a subwindow of a predetermined form according to the generation reference coordinate of a subwindow determined by said reference coordinate determining means, and for determining as a test target area to be searched for a spot an image area, in said frame memory, corresponding to the area of said subwindow.

4. The cylindrical container inner surface tester according to Claim 3, further comprising:
binary image signal generating means (25, 14) for generating a binary image signal by converting to a binary value a multi-value continuous tone image signal in said sub-window according to a predetermined threshold for use in detecting the background of said cylindrical container, wherein
said target area extracting means determines as a test target area to be searched for a spot an image area, in said frame memory, corresponding to the area obtained by excluding the background of said cylindrical container from said subwindow area.

## Patentansprüche

1. Eine Vorrichtung zur Kontrolle der Innenfläche eines zylindrischen Behälters zur Bestimmung eines Punkts (5) auf der Innenfläche der Seite eines achsensymmetrischen zylindrischen Behälters (1) einer vorbestimmten Form mit einer linearen Verbindungsstelle (3, 4) an seiner Seitenfläche durch Beleuchten (2) der Innenseite des zylindrischen Behälters von oben, Aufnehmen der beleuchteten Fläche des zylindrischen Behälters durch eine Fernsehkamera von oben in Achsenrichtung des zylindrischen Behälters sowie Analysieren des aufgenommenen Bilds, wobei die Kontrollvorrichtung folgendes aufweist:
einen Rahmenspeicher (21) zum Speichern eines Mehrwert-Dauerton-Bildsignals, das durch A/D-Umwandlung eines durch Abtasten des aufgenommenen Bilds erhaltenen Dauerton-Bildsignals erhalten wird;
Mittel zur Bereichsspezifikation (30, 37) zur Erzeugung eines ringförmigen Fenstermusters, so daß das Bild der Verbindungsstelle an der Seite des Behälters in diesem Muster enthalten ist;
Änderungspunkt-Speichermittel (25, 38) zur Umwandlung eines Mehrwert-Dauerton-Bildsignals, das in einem horizontalen oder vertikalen Abtastvorgang aus einem Bereich herausgelesen wird, der von einem ringförmigen Fenstermuster spezifiziert wird, das vom Mittel zur Bereichsspezifikation erzeugt wird, in einen binären Wert gemäß einem vorbestimmten Schwellenwert und zur Speicherung der Koordinaten eines Signaländerungspunkts eines binären Bildsignals, das vom Umwandlungsvorgang erzeugt wird, für jeden Abtastvorgang;
Mittel zur Positionsbestimmung (25, 38) zur Bestimmung der Position einer Linie, die der Verbindungsstelle an der Seitenfläche des Behälters ähnlich ist, gemäß den Koordinaten von Signaländerungspunkten, die im Änderungspunkt-Speichermittel gespeichert sind;
Mittel zur Kreuzungspunktberechnung (23, 30, 37, 38) zur Berechnung der Koordinaten eines Kreuzungspunkts zwischen einer Linie, die vom Mittel zur Positionsbestimmung bestimmt wird, und dem ringförmigen Fenstermuster;
Mittel zur Bezugskoordinatenbestimmung (22, 30, 37, 38) zur Bestimmung einer Erzeugungsbezugskoordinate eines Teilfensters durch Hinzufügen eines vorbestimmten Verschiebewerts zu den Kreuzungspunktkoordinaten, die vom Mittel zur Kreuzungspunktberechnung erhalten werden; sowie
Mittel zur Zielbereichsextraktion (22, 30, 37, 38) zur Erzeugung eines Teilfensters einer vorbestimmten Form gemäß den Erzeugungsbezugskoordinaten eines Teilfensters, das vom Mittel zur Bezugskoordinatenbestimmung bestimmt wird, sowie zur Bestimmung eines Bildbereichs im Rahmenspeicher als nach einem Punkt zu durchsuchender Kontrollzielbereich, der dem Bereich des Teilfensters entspricht.

2. Die Vorrichtung zur Kontrolle der Innenfläche eines zylindrischen Behälters nach Anspruch 1, weiterhin aufweisend:
Mittel zur Erzeugung eines binären Bildsignals (25, 14) zur Erzeugung eines binären Bildsignals durch Umwandlung eines Mehrwert-Dauerton-Bildsignals im Teilfenster in einen binären Wert gemäß einem vorbestimmten Schwellenwert zur Verwendung bei der Erfassung des Hintergrunds des zylindrischen Behälters, worin
das Mittel zur Zielbereichsextraktion einen Bildbereich im Rahmenspeicher als nach einem Punkt zu durchsuchenden Kontrollzielbereich bestimmt, der dem Bereich entspricht, der durch Ausfiltern des Hintergrunds des zylindrischen Behälters aus dem Teilfensterbereich erhalten wird.

3. Eine Vorrichtung zur Kontrolle der Innenfläche eines zylindrischen Behälters zur Bestimmung eines Punkts (5) auf der Innenfläche der Seite eines achsensymmetrischen zylindrischen Behälters (1) einer vorbestimmten Form mit einer linearen Verbindungsstelle (3, 4) an seiner Seitenfläche durch Beleuchten (2) der Innenseite des zylindrischen Behälters von oben, Aufnehmen der beleuchteten Fläche des zylindrischen Behälters durch eine Fernsehkamera schräg von oben in Achsenrichtung des zylindrischen Behälters, sowie Analysieren des aufgenommenen Bilds, wobei die Kontrollvorrichtung folgendes aufweist:
einen Rahmenspeicher (21) zum Speichern eines Mehrwert-Dauerton-Bildsignals, das durch A/D-Umwandlung eines durch Abtasten des aufgenommenen Bilds erhaltenen Dauerton-Bildsignals erhalten wird;
Mittel zur Bereichsspezifikation (30, 37) zur Erzeugung eines festen Fenstermusters, so daß das Bild der Verbindungsstelle an der Seite des Behälters in diesem Muster enthalten ist;
Änderungspunkt-Speichermittel (25, 38) zur Umwandlung eines Mehrwert-Dauerton-Bildsignals, das in einem horizontalen oder vertikalen Abtastvorgang aus einem Bereich herausgelesen wird, der von einem festen Fenstermuster spezifiziert wird, das vom Mittel zur Bereichsspezifikation erzeugt wird, in einen binären Wert gemäß einem vorbestimmten Schwellenwert sowie zur Speicherung der Koordinaten eines Signaländerungspunkts eines binären Bildsignals, das vom Umwandlungsvorgang erzeugt wird, für jeden Abtastvorgang;
Mittel zur Positionsbestimmung (25, 38) zur Bestimmung der Position einer Linie, die der Verbindungsstelle an der Seitenfläche des Behälters ähnlich ist, gemäß den Koordinaten von Signaländerungspunkten, die im Änderungspunkt-Speichermittel gespeichert sind;
Mittel zur Kreuzungspunktberechnung (23, 30, 37, 38) zur Berechnung der Koordinaten eines Kreuzungspunkts zwischen einer Linie, die vom Mittel zur Positionsbestimmung bestimmt wird, und dem festen Fenstermuster;
Mittel zur Bezugskoordinatenbestimmung (22, 30, 37, 38) zur Bestimmung einer Erzeugungsbezugskoordinate eines Teilfensters durch Hinzufügen eines vorbestimmten Verschiebewerts zu den Kreuzungspunktkoordinaten, die vom Mittel zur Kreuzungspunktberechnung erhalten werden; sowie
Mittel zur Zielbereichsextraktion (22, 30, 37, 38) zur Erzeugung eines Teilfensters einer vorbestimmten Form gemäß den Erzeugungsbezugskoordinaten eines Teilfensters, das vom Mittel zur Bezugskoordinatenbestimmung bestimmt wird, sowie zur Bestimmung eines Bildbereichs im Rahmenspeicher als nach einem Punkt zu durchsuchender Kontrollzielbereich, der dem Bereich des Teilfensters entspricht.

4. Die Vorrichtung zur Kontrolle der Innenfläche eines zylindrischen Behälters nach Anspruch 3, weiterhin aufweisend:
Mittel zur Erzeugung eines binären Bildsignals (25, 14) zur Erzeugung eines binären Bildsignals durch Umwandlung eines Mehrwert-Dauerton-Bildsignals im Teilfenster in einen binären Wert gemäß einem vorbestimmten Schwellenwert zur Verwendung bei der Erfassung des Hintergrunds des zylindrischen Behälters, worin
das Mittel zur Zielbereichsextraktion einen Bildbereich im Rahmenspeicher als nach einem Punkt zu durchsuchenden Kontrollzielbereich bestimmt, der dem Bereich entspricht, der durch Ausfiltern des Hintergrunds des zylindrischen Behälters aus dem Teilfensterbereich erhalten wird.

## Revendications

1. Appareil de contrôle d'une surface intérieure d'un conteneur cylindrique destiné à identifier une tache (5) sur la surface intérieure de la paroi d'un conteneur cylindrique (1) axisymétrique et d'une forme prédéterminée comportant un joint linéaire (3, 4) dans sa surface latérale, en éclairant (2) l'intérieur dudit conteneur cylindrique d'au-dessus, en capturant grâce à un appareil de prises de vues électronique la surface éclairée dudit conteneur cylindrique d'au-dessus dans la direction de l'axe dudit conteneur cylindrique, et en analysant l'image capturée, ledit appareil de contrôle comprenant :
une mémoire d'images (21) destinée à mémoriser un signal d'image à ton continu et à valeurs multiples obtenu par conversion analogique/numérique d'un signal d'image à ton continu obtenu en balayant ladite image capturée ;
des moyens de spécification d'aire (30, 37) destinés à générer une configuration de fenêtre de forme annulaire telle que l'image dudit joint dans la paroi dudit conteneur est incluse dans ladite configuration ;
des moyens de mémorisation de points de variation (25, 38) destinés à convertir en une valeur binaire, en fonction d'un seuil prédéterminé, un signal d'image à ton continu et à valeurs multiples lu par une opération de balayage horizontal ou vertical à partir d'une aire spécifiée par une configuration de fenêtre de forme annulaire générée par lesdits moyens de spécification d'aire, et destinés à mémoriser, à chaque opération de balayage, la coordonnée d'un point de variation de signal d'un signal d'image binaire généré par ledit processus de conversion ;
des moyens de détermination de position (25, 38) destinés à déterminer la position d'une ligne similaire audit joint dans la surface latérale dudit conteneur en fonction des coordonnées des points de variation de signaux mémorisés dans lesdits moyens de mémorisation de points de variation ;
des moyens de calcul d'intersection (23, 30, 37, 38) destinés à calculer la coordonnée d'une intersection entre une ligne déterminée par lesdits moyens de détermination de position et ladite configuration de fenêtre de forme annulaire ;
des moyens de détermination de coordonnées de référence (22, 30, 37, 38) destinés à déterminer une coordonnée de référence de génération d'une sous-fenêtre en additionnant une valeur de décalage prédéterminée à ladite coordonnée d'intersection obtenue par lesdits moyens de calcul d'intersection ; et
des moyens d'extraction d'aire-cible (22, 30, 37, 38) destinés à générer une sous-fenêtre de forme prédéterminée en fonction de la coordonnée de référence de génération d'une sous-fenêtre déterminée par lesdits moyens de détermination de coordonnées de référence, et destinés à déterminer en tant qu'aire-cible de test devant être examinée pour une tache, une aire d'image, dans ladite mémoire d'images, correspondant à l'aire de ladite sous-fenêtre.

2. Appareil de contrôle d'une surface intérieure d'un conteneur cylindrique selon la revendication 1, comprenant en outre :
des moyens de génération de signaux d'images binaires (25, 14) destinés à générer un signal d'image binaire en convertissant en une valeur binaire un signal d'image à ton continu et à valeurs multiples dans ladite sous-fenêtre en fonction d'un seuil prédéterminé destiné à être utilisé pour la détection de l'arrière-plan dudit conteneur cylindrique, dans lequel
lesdits moyens d'extraction d'aire-cible déterminent en tant qu'aire-cible de test devant être examinée pour une tache, une aire d'image, dans ladite mémoire d'images, correspondant à l'aire obtenue en excluant l'arrière-plan dudit conteneur cylindrique de ladite aire de sous-fenêtre.

3. Appareil de contrôle d'une surface intérieure d'un conteneur cylindrique destiné à identifier une tache (5) sur la surface intérieure de la paroi d'un conteneur cylindrique (1) axisymétrique et d'une forme prédéterminée comportant un joint linéaire (3, 4) dans sa surface latérale, en éclairant (2) l'intérieur dudit conteneur cylindrique d'au-dessus, en capturant grâce à un appareil de prises de vues électronique la surface éclairée dudit conteneur cylindrique obliquement d'au-dessus dans la direction de l'axe dudit conteneur cylindrique, et en analysant l'image capturée, ledit appareil de contrôle comprenant :
une mémoire d'images (21) destinée à mémoriser un signal d'image à couleur continue et à valeurs multiples obtenue par conversion analogique-numérique d'un signal d'image à ton continu obtenu en balayant ladite image capturée ;
des moyens de spécification d'aire (30, 37) destinés à générer une configuration de fenêtre fixe telle que l'image dudit joint dans la paroi dudit conteneur est incluse dans ladite configuration ;
des moyens de mémorisation de points de variation (25, 38) destinés à convertir en une valeur binaire, en fonction d'un seuil prédéterminé, un signal d'image à ton continu et à valeurs multiples lu par une opération de balayage horizontal ou vertical à partir d'une aire spécifiée par une configuration de fenêtre fixe générée par lesdits moyens de spécification d'aire, et destinés à mémoriser, à chaque opération de balayage, la coordonnée d'un point de variation de signal d'un signal d'image binaire généré par ledit processus de conversion ;
des moyens de détermination de position (25, 38) destinés à déterminer la position d'une ligne similaire audit joint dans la surface latérale dudit conteneur en fonction des coordonnées des points de variation de signaux mémorisés dans lesdits moyens de mémorisation de points de variation ;
des moyens de calcul d'intersection (23, 30, 37, 38) destinés à calculer la coordonnée d'une intersection entre une ligne déterminée par lesdits moyens de détermination de position et ladite configuration de fenêtre fixe ;
des moyens de détermination de coordonnées de référence (22, 30, 37, 38) destinés à déterminer une coordonnée de référence de génération d'une sous-fenêtre en additionnant une valeur de décalage prédéterminée à ladite coordonnée d'intersection obtenue par lesdits moyens de calcul d'intersection ; et
des moyens d'extraction d'aire-cible (22, 30, 37, 38) destinés à générer une sous-fenêtre de forme prédéterminée en fonction de la coordonnée de référence de génération d'une sous-fenêtre déterminée par lesdits moyens de détermination de coordonnées de référence, et destinés à déterminer en tant qu'aire-cible de test devant être examinée pour une tache, une aire d'image, dans ladite mémoire d'images, correspondant à l'aire de ladite sous-fenêtre.

4. Appareil de contrôle d'une surface intérieure d'un conteneur cylindrique selon la revendication 3, comprenant en outre :
des moyens de génération de signaux d'images binaires (25, 14) destinés à générer un signal d'image binaire en convertissant en une valeur binaire un signal d'image à ton continu et à valeurs multiples dans ladite sous-fenêtre en fonction d'un seuil prédéterminé destiné à être utilisé pour la détection de l'arrière-plan dudit conteneur cylindrique, dans lequel
lesdits moyens d'extraction d'aire-cible déterminent en tant qu'aire-cible de test devant être examinée pour une tache, une aire d'image, dans ladite mémoire d'images, correspondant à l'aire obtenue en excluant l'arrière-plan dudit conteneur cylindrique de ladite aire de sous-fenêtre.
